# EUROPÄISCHE PATENTANMELDUNG

(11) **EP 2 824 334 A1**
(43) Veröffentlichungstag der Anmeldung: **14.01.2015**
(21) Anmeldenummer: 13175605.8
(22) Anmeldetag: 08.07.2013
(51) Int. Cl.: F15B 11/17

(54) **Hydraulischer Linearantrieb**

(71) Anmelder: Siemens Aktiengesellschaft, 80333 München (DE)
(72) Erfinder: Geier, Ingo, 90556 Cadolzburg (DE); Oberndorfer, Klaus, 91056 Erlangen (DE); Schäufele, Stephan, 91052 Erlangen (DE)

(57) **Zusammenfassung**

Die Erfindung ist ein hydraulischer Linearantrieb (10) mit einem mit zumindest zwei entgegengesetzt wirkenden Druckkammern (14,16) ausgeführten Hydraulikzylinder (12), mit einer ersten und einer zweiten Hydromaschine (24,32) zur Druckmittelversorgung der beiden entgegengesetzt wirkenden Druckkammern (14,16), wobei die erste Hydromaschine (24) zur Druckmittelversorgung an eine erste der beiden entgegengesetzt wirkenden Druckkammern (14,16) gekoppelt ist und wobei die zweite Hydromaschine (32) zum Druckmittelaustausch an die erste Druckkammer (14) und eine gegenüberliegende zweite Druckkammer (16) der beiden entgegengesetzt wirkenden Druckkammern (14,16) gekoppelt ist.

## Beschreibung

Die Erfindung betrifft einen hydraulischen Linearantrieb mit einem mit zumindest zwei entgegengesetzt wirkenden Druckkammern ausgeführten Hydraulikzylinder. Die beiden Druckkammern der mindestens zwei Druckkammern des Hydraulikzylinders werden im Folgenden zur Unterscheidung auch als erste Druckkammer und zweite Druckkammer oder als Druckkammer und Gegenkammer bezeichnet.

Hydraulische Linearantriebe sind an sich bekannt und werden zum Beispiel bei hydraulischen Spritzgießmaschinen oder hydraulischen Pressen zur Bewegung eines Pressstempels bzw. zur Bewegung einer Oberform verwendet.

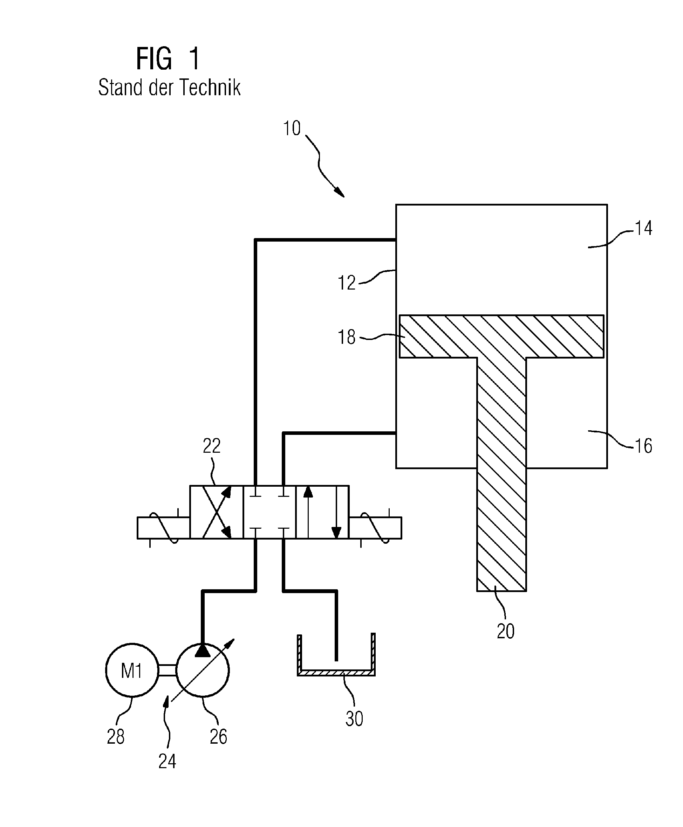

Zur Positionierung eines hydraulischen Linearantriebs wird zum Beispiel mittels einer Pumpe ein Druckmittel, also normalerweise ein Hydraulikmedium, üblicherweise Hydrauliköl, einem Proportionalventil zugeführt, das mit seinen Ausgängen mit den beiden Druckkammern des Hydraulikzylinders verbunden ist. Die Darstellung in FIG 1 zeigt eine solche an sich bekannte Ausführungsform eines hydraulischen Linearantriebs.

Durch eine mittels einer Steuerung/Regelung vorgegebene Stellung des Proportionalventils wird das Hydraulikmedium in eine der Druckkammern des Hydraulikzylinders gepresst. Dabei wird die Menge des zu- oder abfließenden Öls durch die Stellung des Proportionalventils beeinflusst. Das bei einem Vorschub aus der Gegenkammer verdrängte Öl fließt über das Proportionalventil zurück in einen als Druckmittelreservoir fungierenden Tank. Grundsätzlich muss dabei eine Hydromaschine einen Druck zur Verfügung stellen, der zur Überwindung einer auf die Kolbenstange des hydraulischen Linearantriebs wirkenden Prozesskraft ausreicht. Nur so ist eine Steuerbarkeit/Regelbarkeit des Ölflusses und damit eine Steuerbarkeit/Regelbarkeit der Kolbenbewegung gewährleistet. Die resultierenden Drosselverluste im Proportionalventil betragen allerdings oftmals über 50% der durch die Hydromaschine eingespeisten Leistung. Dies ist nachteilig und mit der stetigen Verteuerung der Energiekosten wird versucht, solche Energieverluste nach Möglichkeit zu vermeiden.

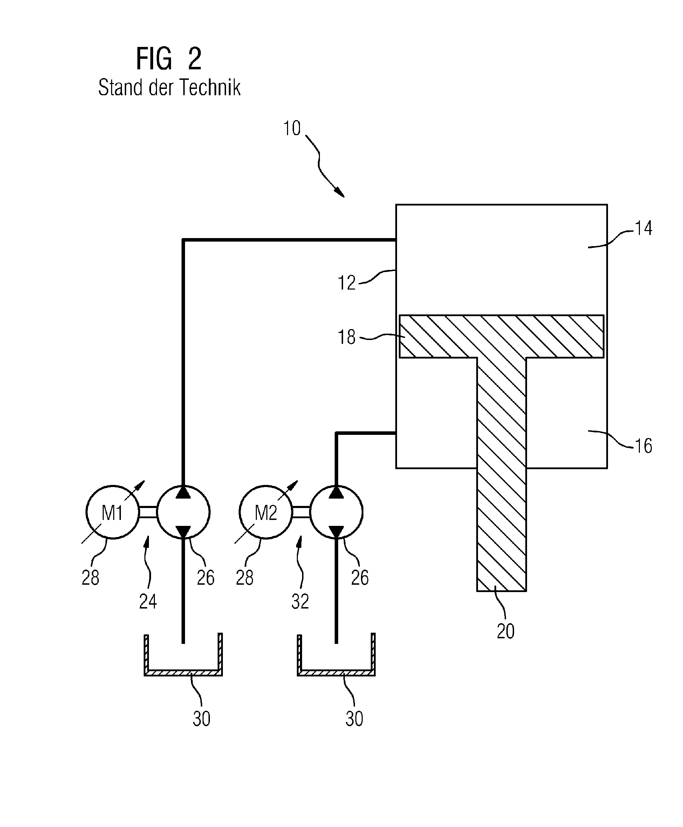

Eine Lösung in dieser Hinsicht ist aus den deutschen Patentanmeldungen DE 196 00 650 A1 und DE 10 2008 039 011 A1 bekannt. Dort ist vorgesehen, dass beide Druckkammern des Hydraulikzylinders jeweils mit einer eigenen Hydromaschine aus einem Druckmittelreservoir mit dem jeweiligen Druckmittel versorgt werden. Dabei arbeitet jeweils eine Hydromaschine generatorisch und die andere motorisch. Die Darstellung in FIG 2 zeigt diese bekannte Lösung.

Eine Aufgabe der vorliegenden Erfindung besteht ausgehend von diesem Stand der Technik darin, eine weitere Ausführungsform eines hydraulischen Linearantriebs anzugeben.

Diese Aufgabe wird erfindungsgemäß mit einem hydraulischen Linearantrieb mit den Merkmalen des Anspruchs 1 gelöst. Dafür ist bei einem hydraulischen Linearantrieb mit einem mit zumindest zwei entgegengesetzt wirkenden Druckkammern - erste Druckkammer und zweite Druckkammer oder Druckkammer und Gegenkammer - ausgeführten Hydraulikzylinder und mit einer ersten und einer zweiten Hydromaschine zur Druckmittelversorgung der beiden Druckkammern, wobei die erste Hydromaschine zur Druckmittelversorgung an die erste Druckkammer gekoppelt ist, vorgesehen, dass die zweite Hydromaschine zum Druckmittelaustausch an die erste Druckkammer und die hydraulisch gegenüberliegende zweite Druckkammer (Gegenkammer) gekoppelt ist.

Der Vorteil der Erfindung besteht nicht nur darin, dass auch bei dieser Lösung ein Proportionalventil und die damit einhergehenden Drosselverluste vermieden werden, sondern auch darin, dass die zweite Hydromaschine die erste Hydromaschine unterstützen kann, so dass die Förderleistung der ersten Hydromaschine im Vergleich zu einer Situation, bei der jeweils eine Hydromaschine in genau eine Druckkammer des Hydraulikzylinders arbeitet, reduziert werden kann.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin und sind nicht als ein Verzicht auf die Erzielung eines selbständigen, gegenständlichen Schutzes für die Merkmalskombinationen der rückbezogenen Unteransprüche zu verstehen.

Bei dem Hydraulikzylinder handelt es sich um einen Differentialzylinder mit einer Kolbenkammer und einer Ringkammer als den beiden von dem Hydraulikzylinder umfassten und entgegengesetzt wirkenden Druckkammern.

Dann kommt in Betracht, dass die erste Druckkammer, an welche die erste Hydromaschine zur Druckmittelversorgung gekoppelt ist, die Kolbenkammer des Hydraulikzylinders und die zweite Druckkammer entsprechend die Ringkammer des Hydraulikzylinders ist, wobei die zweite Hydromaschine zur Druckmittelversorgung an die Kolbenkammer und an die Ringkammer gekoppelt ist. Alternativ ist die erste Druckkammer, an welche die erste Hydromaschine zur Druckmittelversorgung gekoppelt ist, die Ringkammer und die zweite Druckkammer die Kolbenkammer des Hydraulikzylinders, wobei die zweite Hydromaschine zur Druckmittelversorgung wiederum sowohl an die Kolbenkammer wie auch an die Ringkammer gekoppelt ist.

Die Auswahl, ob die erste Hydromaschine an die erste Druckkammer/Kolbenkammer oder an die zweite Druckkammer/Ringkammer gekoppelt ist, hängt von der jeweiligen Anwendungssituation ab. Ein Vorteil der hier beschriebenen Lösung besteht damit auch darin, dass in dieser Hinsicht eine bisher nicht gegebene Flexibilität besteht, denn bei einem hydraulischen Linearantrieb, bei dem die erste Hydromaschine an die Kolbenkammer angeschlossen ist, ist ohne größere Probleme ein Anschluss der ersten Hydromaschine an die zweite Druckkammer/Ringkammer oder umgekehrt möglich.

Als erste und zweite Hydromaschine kommt in grundsätzlich an sich bekannter Art jeweils eine Konstantpumpe mit einem drehzahlvariablen Elektromotor, aber auch eine Gruppe mehrerer Konstantpumpen mit jeweils einem drehzahlvariablen Elektromotor in Betracht. Genauso kommt als erste und zweite Hydromaschine in grundsätzlich an sich bekannter Art jeweils eine Verstellpumpe mit einem drehzahlvariablen oder einem drehzahlfesten Elektromotor oder eine Gruppe solcher Aggregate in Betracht.

Beim Betrieb des hydraulischen Linearantriebs wird mittels der ersten Hydromaschine Druckmittel aus einem Druckmittelreservoir in die erste Druckkammer und mittels der zweiten Hydromaschine Druckmittel entweder aus der ersten Druckkammer in die zweite Druckkammer oder aus der zweiten Druckkammer in die erste Druckkammer gefördert/gepresst. Der oben beschriebene Unterstützungseffekt ergibt sich, wenn mittels der ersten Hydromaschine Druckmittel, also zum Beispiel Hydrauliköl, aus dem Druckmittelreservoir in die erste Druckkammer gefördert wird und gleichzeitig mittels der zweiten Hydromaschine Druckmittel aus der zweiten Druckkammer ebenfalls in die erste Druckkammer gefördert/gepresst wird.

Beim Betrieb des hydraulischen Linearantriebs wird üblicherweise eine Position des Linearantriebs in geeigneter Art und Weise erfasst und die so erfasste Position als Basis für eine Steuerung oder Lageregelung des Linearantriebs verwendet. Dies ist auch bei dem hier beschriebenen hydraulischen Linearantrieb möglich. Entsprechend ist für eine Lageregelung auch bei einem solchen hydraulischen Linearantrieb ein Wegmesssystem zur Erfassung einer Position des Linearantriebs vorgesehen, so dass mittels eines Lagereglers eine Ansteuerung der ersten und/oder zweiten Hydromaschine entsprechend der erfassten Position und einem vorgegebenen Positionssollwert erfolgt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine erste bekannte Ausführungsform eines hydraulischen Linearantriebs,
- FIG 2: eine zweite bekannte Ausführungsform eines hydraulischen Linearantriebs und
- FIG 3: eine Ausführungsform eines hydraulischen Linearantriebs gemäß der Erfindung.

Die Darstellung in FIG 1 zeigt einen bekannten hydraulischen Linearantrieb 10. Dieser umfasst einen Hydraulikzylinder 12 in Form eines Differenzdruckzylinders mit zwei entgegengesetzt wirkenden Druckkammern 14, 16, nämlich einer ersten Druckkammer 14, die hier und im Folgenden im Interesse einer besseren Lesbarkeit der Beschreibung auch als Kolbenkammer 14 bezeichnet wird, und einer zweiten Druckkammer 16, die hier und im Folgenden entsprechend und zur Unterscheidung als Ringkammer 16 bezeichnet wird.

Durch Einleitung (Einpressen) eines Druckmittels, nämlich üblicherweise Hydrauliköl, in eine der beiden Druckkammern 14, 16 und Ausleitung des Druckmittels aus der jeweils komplementären Druckkammer 14, 16 (Gegenkammer) wird eine Bewegung eines in dem Hydraulikzylinder 12 geführten Kolbens 18 erreicht. Durch die veränderliche Position eines Endes einer von dem Kolben 18 ausgehenden Kolbenstange 20 ergibt sich die Funktion als Linearantrieb.

Das Einpressen des Druckmittels und die komplementäre Ausleitung des Druckmittels erfolgt bei dem in FIG 1 gezeigten hydraulischen Linearantrieb 10 mittels eines Proportionalventils 22. Eine Hydromaschine 24 mit einer Pumpe 26 und einem zum Antrieb der Pumpe 26 vorgesehenen Elektromotor 28 fördert das jeweilige Druckmittel. Das Druckmittel, auf das im Folgenden ohne Verzicht auf eine weitergehende Allgemeingültigkeit oftmals auch unter der Bezeichnung Öl oder Hydrauliköl Bezug genommen wird, gelangt je nach Stellung des Proportionalventils 22 aus einem Druckmittelreservoir 30 entweder in die Kolbenkammer 14 oder in die Ringkammer 16. Das aus der jeweiligen Gegenkammer 14, 16 verdrängte Öl fließt über das Proportionalventil 22 zurück in das Druckmittelreservoir 30, also zum Beispiel einen Öltank.

Mit einem solchen Linearantrieb 10 sind die eingangs skizzierten Nachteile hinsichtlich der im Proportionalventil 22 resultierenden Drosselverluste verbunden.

Die Darstellung in FIG 2 zeigt eine ebenfalls bekannte Ausführungsform eines hydraulischen Linearantriebs 10, welche Verluste, wie sie mit der Verwendung eines Proportionalventil 22 einhergehen, zu vermeiden sucht. Der dargestellte hydraulische Linearantrieb 10 zeichnet sich dabei durch aus, dass neben der bisher (FIG 1) erforderlichen Hydromaschine 24, die im Folgenden zur Unterscheidung als erste Hydromaschine 24 bezeichnet wird, eine weitere Hydromaschine, also eine zweite Hydromaschine 32, vorgesehen ist. Beide Hydromaschinen 24, 32 umfassen jeweils eine Pumpe 26 und einen zum Antrieb der Pumpe 26 vorgesehenen Elektromotor 28. Beide Hydromaschinen 24, 32 arbeiten aus einem Druckmittelreservoir 30 oder einem gemeinsamen Druckmittelreservoir 30. Die erste Hydromaschine 24 ist mit der Kolbenkammer 14 des Hydraulikzylinders 12 gekoppelt. Die zweite Hydromaschine 32 ist mit der Gegenkammer zur Kolbenkammer 14, also mit der Ringkammer 16 des Hydraulikzylinders 12, gekoppelt. Zur Einstellung der Position des Kolbens 18 und damit zur Einstellung einer Position eines Endes der vom Kolben 18 ausgehenden Kolbenstange 20 erfolgt eine lagegeregelte Ansteuerung entweder der ersten Hydromaschine 24 oder der zweiten Hydromaschine 32 oder beider Hydromaschinen 24, 32, wobei für einen Vorhub des Kolbens 18 die erste Hydromaschine 24 Druckmittel, also insbesondere Öl, in die Kolbenkammer 14 fördert/presst und aufgrund des dann aus der Ringkammer 16 verdrängten Öls die zweite Hydromaschine 32 generatorisch betrieben wird.

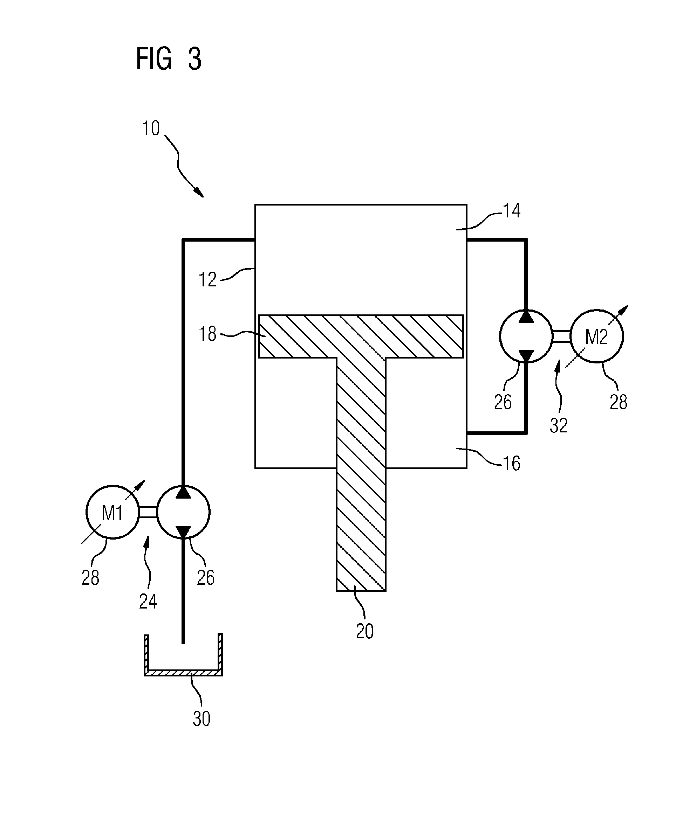

Die Darstellung in FIG 3 zeigt eine schematisch vereinfachte Ausführungsform eines hydraulischen Linearantriebs 10 gemäß der Erfindung. Die Erläuterung erfolgt ebenfalls, allerdings ohne Verzicht auf eine weitergehende Allgemeingültigkeit, anhand eines Hydraulikzylinders 12 in Form eines Differentialzylinders. Der Ansatz eignet sich genauso für einen hydraulischen Linearantrieb 10 mit einem Hydraulikzylinder 12 in Form eines Gleichgangzylinders.

Auch bei dem hydraulischen Linearantrieb 10 in FIG 3 sind eine erste und eine zweite Hydromaschine 24, 32 vorgesehen. Die erste Hydromaschine 24 ist an eine der beiden Druckkammern 14, 16, hier an die Kolbenkammer 14, gekoppelt. Beim Betrieb des hydraulischen Linearantriebs 10 fördert/presst die erste Hydromaschine 24 für einen Vorhub des Kolbens 18 Druckmittel, also zum Beispiel Hydrauliköl, aus einem Druckmittelreservoir 30 in die jeweilige Druckkammer 14, 16 und bei einem Rückhub fließt das jeweilige Druckmittel über die von der dann generatorisch betriebenen ersten Hydromaschine 24 umfasste Pumpe 26 zurück zum Druckmittelreservoir 30. Im Unterschied zu dem hydraulischen Linearantrieb 10 in FIG 2 ist die zweite Hydromaschine 32 nicht mit einem Druckmittelreservoir 30 (FIG 2) verbunden. Tatsächlich ist die zweite Hydromaschine 32 zum Druckmittelaustausch sowohl an die erste Druckkammer 14 wie auch an die zweite Druckkammer 16 gekoppelt.

Bei einem Vorhub des Kolbens 18 wird mittels der ersten Hydromaschine 24 Druckmittel aus dem dortigen Druckmittelreservoir 30 in die Kolbenkammer 14 (erste Druckkammer) gepresst. Aufgrund der damit im Hydraulikzylinder 12 ausgelösten Bewegung des Kolbens 18 aus der Ringkammer 16 (zweite Druckkammer) verdrängtes Druckmittel gelangt über die an beide Druckkammern 14, 16 gekoppelte zweite Hydromaschine 32 in die Kolbenkammer 14 (erste Druckkammer). Es resultiert ein generatorischer Betrieb der zweiten Hydromaschine 32. Die zweite Hydromaschine 32 kann bei einem Kolbenvorhub allerdings auch so betrieben werden, dass sie nicht nur den Rückfluss des Druckmittels aus der Ringkammer 16 (zweite Druckkammer) in die Kolbenkammer 14 (erste Druckkammer) zulässt, sondern dass sie den Rückfluss des Druckmittels aus der Ringkammer 16 (zweite Druckkammer) in die Kolbenkammer 14 (erste Druckkammer) aktiv unterstützt. Dann ist die kombinierte Leistung beider Hydromaschinen 24, 32 für den Kolbenvorhub wirksam.

Beim Kolbenrückhub fördert die zweite Hydromaschine 32 Druckmittel aus der Kolbenkammer 14 (erste Druckkammer) in die Ringkammer 16 (zweite Druckkammer). Aus der Kolbenkammer 14 (erste Druckkammer) dabei verdrängtes Druckmittel fließt über die Pumpe 26 der ersten Hydromaschine 24, die dabei generatorisch betrieben wird, zurück in das Druckmittelreservoir 30.

Der Vorteil der hier vorgeschlagenen Lösung besteht damit vor allem auch darin, dass die zweite Hydromaschine 32 die erste Hydromaschine 24 je nach Bewegungsrichtung des Kolbens 18 unterstützt. Bei einem symbolisch mit A bezeichneten Flächenverhältnis der ersten Druckkammer 14 zur zweiten Druckkammer 16 ergibt sich, dass bei gleicher Ausfahrgeschwindigkeit der mit dem Kolben 18 bewegten Kolbenstange 20 die Förderleistung der ersten Hydromaschine um den Faktor 1 / (1 + (1/A)) verringert werden kann. Wenn die wirksame Fläche der ersten Druckkammer 14 zum Beispiel dreimal so groß ist wie die wirksame Fläche der zweiten Druckkammer 16 (A=3), ergibt sich eine Reduktion der notwendigen Förderleistung der ersten Hydromaschine um 25%.

Bei den Pumpen 26 der beiden Hydromaschinen 24, 32 handelt es sich zum Beispiel um Konstantpumpen. Ansonsten kommen auch sogenannte Verstellpumpen in Betracht. Bei den Motoren 28 der beiden Hydromaschinen 24, 32 handelt es sich zum Beispiel um drehzahlvariable Elektromotoren. Bei einer Verstellpumpe kommt als Antrieb grundsätzlich auch ein drehzahlfester Elektromotor in Betracht.

Beim Betrieb des hydraulischen Linearantriebs 10, speziell bei einem vertikalen Einbau des Linearantriebs 10, so wie er auch in FIG 3 gezeigt ist, kann sich die Situation ergeben, dass bereits das Gewicht des Kolbens 18 und der Kolbenstange 20, normalerweise das Gewicht des Kolbens 18, der Kolbenstange 20 und eines am Ende der Kolbenstange 20 befindlichen Werkzeugs, zum Beispiel einer Oberform einer hydraulischen Presse, das jeweilige Druckmittel aus der zweiten Druckkammer 16 verdrängt und dieses damit über die Pumpe 26 der zweiten Hydromaschine 32 in die erste Druckkammer 14 gelangt. Damit eine solche unbeabsichtigte Bewegung verhindert und eine genaue Positionierung des Endes der Kolbenstange 20 aufgrund einer Lageregelung möglich ist, erfolgt bei solchen Situationen geregelt eine Einleitung des jeweiligen Druckmittels mittels der ersten Hydromaschine 24 in die erste Druckkammer 14 und gleichzeitig mittels der zweiten Hydromaschine 32 eine Einleitung des jeweiligen Druckmittels in die zweite Druckkammer 16. Die Einleitung des Druckmittels aus der ersten Druckkammer 14 in die zweite Druckkammer 16 mittels der zweiten Hydromaschine 32 erfolgt dabei in dem Umfang, wie dem Gewicht von Kolben 18, Kolbenstange 20 und am Ende der Kolbenstange 20 befindlichem Werkzeug entgegenzuwirken ist.

Einzelne im Vordergrund stehende Aspekte der hier eingereichten Beschreibung lassen sich damit kurz wie folgt zusammenfassen:
Angegeben wird ein hydraulischer Linearantrieb 10 mit einem mit zumindest zwei entgegengesetzt wirkenden Druckkammern 14, 16 ausgeführten Hydraulikzylinder 12, mit einer ersten und einer zweiten Hydromaschine 24, 32 zur Druckmittelversorgung der beiden entgegengesetzt wirkenden Druckkammern 14, 16, wobei die erste Hydromaschine 24 zur Druckmittelversorgung an eine erste der beiden entgegengesetzt wirkenden Druckkammern 14, 16 gekoppelt ist und wobei die zweite Hydromaschine 32 zum Druckmittelaustausch an die erste Druckkammer 14 und eine gegenüberliegende zweite Druckkammer 16 der beiden entgegengesetzt wirkenden Druckkammern 14, 16 gekoppelt ist.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

## Patentansprüche

1. Hydraulischer Linearantrieb (10) mit einem mit zumindest zwei entgegengesetzt wirkenden Druckkammern (14,16) ausgeführten Hydraulikzylinder (12),
- mit einer ersten und einer zweiten Hydromaschine (24,32) zur Druckmittelversorgung der beiden Druckkammern (14,16),
- wobei die erste Hydromaschine (24) zur Druckmittelversorgung an eine erste der beiden Druckkammern (14,16) gekoppelt ist,
**dadurch gekennzeichnet,**
- **dass** die zweite Hydromaschine (32) zum Druckmittelaustausch an die erste Druckkammer (14) und eine gegenüberliegende zweite Druckkammer (16) der beiden Druckkammern (14, 16) gekoppelt ist.

2. Hydraulischer Linearantrieb (10) nach Anspruch 1, wobei die erste der beiden Druckkammern (14, 16) eine Kolbenkammer (14) des Hydraulikzylinders (12) und wobei die zweite der beiden Druckkammern (14,16) eine Ringkammer (16) des Hydraulikzylinders (12) ist.

3. Hydraulischer Linearantrieb (10) nach Anspruch 1, wobei die erste der beiden Druckkammern (14,16) eine Ringkammer (16) des Hydraulikzylinders (12) und wobei die zweite der beiden Druckkammern (14,16) eine Kolbenkammer (14) des Hydraulikzylinders (12) ist.

4. Hydraulischer Linearantrieb (10) nach einem der vorangehenden Ansprüche, wobei die erste und/oder die zweite Hydromaschine (24, 32) eine Pumpe (26) mit einem Motor (28), insbesondere eine Konstantpumpe mit einem drehzahlvariablen Elektromotor oder eine Verstellpumpe mit einem drehzahlfesten Elektromotor oder eine Verstellpumpe mit einem drehzahlvariablen Elektromotor, ist oder eine Gruppe mehrerer Pumpen (26) mit jeweils einem Elektromotor (28), insbesondere eine Gruppe mehrerer Konstantpumpen mit jeweils einem drehzahlvariablen Elektromotor oder eine Gruppe mehrerer Verstellpumpen mit jeweils einem drehzahlfesten Elektromotor oder eine Gruppe mehrerer Verstellpumpen mit jeweils einem drehzahlvariablen Elektromotor.

5. Hydraulischer Linearantrieb (10) nach einem der vorangehenden Ansprüche, wobei beim Betrieb mittels der ersten Hydromaschine (24) Druckmittel aus einem Druckmittelreservoir (30) in die erste Druckkammer (14) und mittels der zweiten Hydromaschine (32) Druckmittel entweder aus der ersten Druckkammer (14) in die zweite Druckkammer (16) oder aus der zweiten Druckkammer (16) in die erste Druckkammer (14) förderbar ist.

6. Hydraulischer Linearantrieb (10) nach einem der vorangehenden Ansprüche, mit einem Wegmesssystem zur Erfassung einer Position des Linearantriebs und mit einem Lageregler zur Ansteuerung der ersten und der zweiten Hydromaschine (24,32) entsprechend der erfassten Position und einem vorgegebenen Positionssollwert.
